# EUROPEAN PATENT SPECIFICATION

(11) **EP 2 695 657 B1**
(45) Date of publication and mention of the grant of the patent: **22.03.2017**
(21) Application number: 12768487.6
(22) Date of filing: 27.03.2012
(51) Int. Cl.: B01D 39/16, B01D 46/02, B01D 46/42, B01D 46/00, B01D 46/10, B01D 46/52

(54) **COMPRESSED AIR PURIFIER**
LUFTREINIGER FÜR KOMPRIMIERTE LUFT
PURIFICATEUR D'AIR COMPRIMÉ

(30) Priority: 07.04.2011 KR 20110032039
(43) Date of publication of application: 12.02.2014
(73) Proprietor: Kim, Eui-Woong, Seoul 156-011 (KR)
(72) Inventor: Kim, Eui-Woong, Seoul 156-011 (KR)
(74) Representative: Goddar, Heinz J.
(86) International application number: PCT/KR2012/002206
(87) International publication number: WO 2012/138075

(56) References cited:
- EP-A1- 0 858 827
- JP-A- 2000 042 322
- JP-A- 2002 113 320
- KR-A- 20110 008 367
- US-A1- 2004 089 154
- US-A1- 2009 188 219

## Description

### TECHNICAL FIELD

The present invention relates to a compressed air purifier, and more particularly, to a compressed air purifier for duct-collecting foreign substances that is installed at a pipe of an automatic air pressure system or air pressure plant.

### BACKGROUND ART

As well known, compressed air of 1 kgf/cm² or more to be supplied to an automatic air pressure system or air pressure plant is generated in a compressor. Generally, moisture of compressed air compressed by the compressor is condensed by a cooler and then is stored in an air tank, a main pipe is connected to the air tank, a branch pipe is installed at the main pipe, and an air pressure device, such as an air pressure cylinder or air gun, is installed at the branch pipe.

A filter that purifies contaminants is installed at the compressor and the pipe. The filter includes a suction filter installed at a suction pipe of the compressor and a main line filter and/or an air pressure filter installed at the main pipe and the branch pipe.

The suction filter separates solid foreign substances from air when air is inhaled into the compressor, the main line filter separates condensed water and large dust from compressed air compressed by the compressor, and the air pressure filter removes solid foreign substances or moisture from air.

These filters mainly use a metal net or woven/nonwoven fabric as a filter element. The main line filter separates condensed water and large dust from compressed air by causing a turning motion of compressed air using a deflector due to a cyclone effect and removes rust and foreign substances using the filter element, and an automatic drain valve is installed at a lower part of the main line filter so as to automatically discharge condensed water. The air pressure filter is installed to remove dust, solid foreign substances such as scale within a pipe, or moisture from compressed air. The air pressure filter includes a deflector that causes a turning motion of compressed air and a filter element, and a condensation drain valve installed at a lower part of the air pressure filter.

In terms of a grain size for separating the foreign substances of these filters, the main line filter has a grain size of 50 to 74 *µ*m, and the air pressure filter has a grain size of about 5 to 20 *µ*m most favorably depending on a degree of filtration.

However, when the above-mentioned filters for installing pipes are used in an automatic air pressure system or air pressure plant that produces not a precise product but a traditional industry product, there is no problem. However, when the filters for installing pipes are used in the automatic air pressure system in a factory for manufacturing a recent precise product, for example, a semiconductor, if compressed air in which separation of foreign substances such as dust or gas is not smoothly performed using these filters, is ejected from the air pressure cylinder into an inside of the factory, the ejected air contaminates the inside of the factory in which a clean room is provided, and separation of the solid foreign substances ejected from the air gun is not smoothly performed, i.e., purification efficiency is lowered, and compressed air in which dust is contained, is directly ejected into a product such that there is a difficulty in quality control, productivity is lowered and quality is lowered and thus improvement thereof is urgently needed.

In addition, in filters for installing pipes according to the related art, as compressed air to be purified flows perpendicular to the filter element, a net of the filter element is clogged, a pressure loss increases over time, and consumed power increases. Also, when the thickness of the filter element increases so as to maintain good purification efficiency, the pressure loss increases more. Since the filter element is formed of a woven/non-woven fabric, the net of the filter element is deformed by an compressed air pressure so that purification efficiency is lowered.

JP 2002113320 A relates to a filter for a dust collector. In the filter for the dust collector, the filter is formed with two members consisting of a filter body being consumption material to which an upper surface plate is mounted at an upper end port and a bottom surface plate to which an inside packed body is integrally formed is mounted at an lower end port and also the whole is formed in cylindrical shape having star-like section and a cage body to which a filter plate to which a Venturi tube is projecting by provided to face downward is mounted at an upper end part, and also the filter is assembled by reinforcing by inserting the cage body into the inside of the filter body.

JP 2000042322 A relates to a filter medium reinforcing sheet, filter medium for air filter and air filter. The air filter is formed of a fiber consisting of core-clad hot-melt synthetic resin and includes a filter medium reinforcing sheet placed and fixed on a porous membrane and the porous membrane having 0.1-5 µm average pore diameter, low in pressure drop and made of polytetrafluoroethylene. The reinforcing sheet is fixed to at least one side of the porous membrane to constitute the filter medium for an air filter, and the air filter using the filter medium is provided.

The applicant of the invention has proposed a compressed air purifier that meets a demand for the improvement and solves a problem related to lowered purification efficiency, as disclosed in KR 10-2011-0008367(A).

The compressed air purifier disclosed in KR 10-2011-0008367(A) includes a case which is installed at a compressed air pipe and in which entrance/exit covers are coupled to both ends of a main body of a cylindrical case and an inlet pipe and an outlet pipe are connected to the entrance/exit covers; a filter element in which a polymer synthetic resin film is charged and a plurality of gap maintaining protrusions are simultaneously formed and then the film is wound into a cylindrical shape to form a vent channel and a plurality of filters are inserted into the main body of the case in such a way that the vent channel is parallel to the flow direction of compressed air to be purified; and a spacer installed between the entrance/exit covers and the filter element, wherein the spacer includes gap maintaining rings and a sealing and supporting plate and the plurality of filters are closely inserted into an inner side of the main body of the case, thereby reducing and purifying a high pressure air that flows through the compressed air pipe.

The invention disclosed in the above patent document 1 is determined that good dust-collection efficiency of solid foreign substances in air to be purified in a factory for manufacturing precise electronic parts, such as a semiconductor that is being currently in mass production, is maintained so that quality control can be easily performed and a cause of lowering quality can be removed.

As a degree of integration of the semiconductor increases, the quality of air in a factory for manufacturing a semiconductor or a liquid crystal display (LCD), i.e., a collection grain of air must be more reduced in proportion to the increasing degree of integration of the semiconductor. Thus, purification efficiency of a filter must be improved.

### DETAILED DESCRIPTION OF THE INVENTION

### TECHNICAL PROBLEM

The present invention provides a compressed air purifier that reduces compressed air flowing through a pipe and causes swirl or turbulence of compressed air so that purification efficiency of solid foreign substances may be improved.

### TECHNICAL SOLUTION

According to an aspect of the present invention, there is provided a compressed air purifier including: a case in which entrance/exit covers are coupled to both ends of a main body of a cylindrical case, and an inlet pipe and an outlet pipe connected to a compressed air pipe are connected to the entrance/exit covers, respectively; and filter means in which a main body of a filter made of a polymer synthetic resin is charged electrostatically and a plurality of gap maintaining protrusions are simultaneously formed, and then the main body of the filter is wound into a cylindrical shape to form a filter element having a vent channel, filters having an arc-shaped cross-section are formed from the filter element and then, shape maintaining members are installed at both sides and the vicinity of the filters, the filters having an arc-shaped cross-section are positioned facing each other to be coupled, thereby forming a cavity inside the filters 21 and 22, and two or more pairs of the filters are inserted into the main body of a case in such a way that space portions distanced by certain intervals are formed between the entrance/exit covers and the filter, and between the filters.

### DESCRIPTION OF THE DRAWINGS

FIG. 1 is a cross-sectional view of a compressed air purifier according to an embodiment of the present invention;
FIG. 2 is an exploded perspective view of filters of the compressed air purifier illustrated in FIG. 1;
FIG. 3 is a modified perspective view of the filters of the compressed air purifier of FIG. 1; and
FIG. 4 is a perspective view of a filter element of the compressed air purifier of FIG. 1.

### MODE OF THE INVENTION

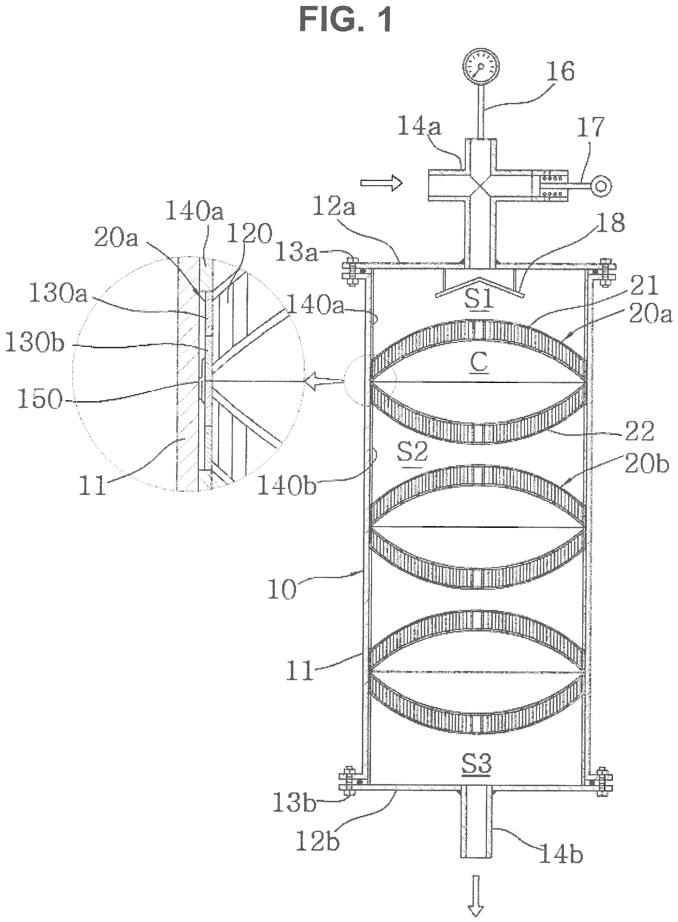

A compressed air purifier according to an embodiment of the present invention includes a case 10 and filter means 20a and 20b, as illustrated in FIG. 1.

In the case 10, entrance/exit covers 12a and 12b are coupled to both ends of a main body 11 of a cylindrical case via bolts 13a and 13b, an inlet pipe 14a is installed at the entrance/exit covers 12a and 12b, a pressure gauge 16 and a valve 17 are installed at the inlet pipe 14a, a diffusion plate 18 is installed at a lower part of the inlet pipe 14a of the entrance cover 12a, an outlet pipe 14b is installed at the exit cover 12b, and the inlet pipe 14a and the outlet pipe 14b are installed in the middle of a compressed air pipe.

In the filter means 20a and 20b, a main body 121 of a filter made of a polymer synthetic resin film, such as polypropylene or polyethylene, is charged by a corona discharging device of 10 to 40 kv so as to give charges (static electricity) having a positive (+) polarity and a negative (-) polarity and a plurality of gap maintaining protrusions 122 are simultaneously formed, and then the main body 121 of the filter in which the charging operation is performed and the plurality of gap maintaining protrusions 122 are simultaneously formed, is wound into a cylindrical shape to form a filter element 120 having a vent channel 123. The filter element 120 uses an embodiment disclosed in Korean Patent No. 481289 filed by the applicant of the invention. Detailed descriptions of the filter element 120 quote the above prior-art patent specification. The main body 121 of the filter is charged by cutting the polymer synthetic resin to a predetermined width, or the polymer synthetic resin having a large width is charged and then is cut to a predetermined width.

Filters 21 and 22 having an arc-shaped (satgat-shaped or mountain-shaped) cross-section are formed from the filter element 120. The filters 21 and 22 are positioned facing each other to be coupled, thereby forming a cavity C inside the filters 21 and 22 and forming the filter means 20a and 20b.

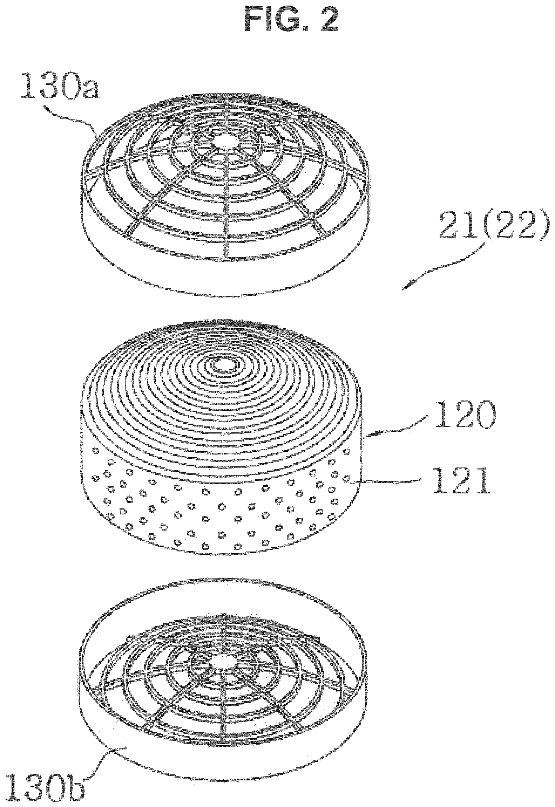

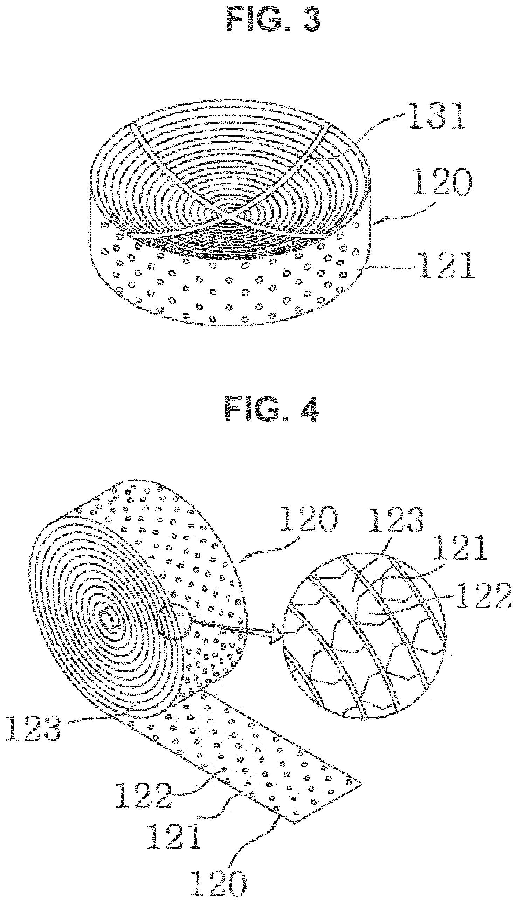

In order to maintain the arc-shaped cross-section, the filters 21 and 22 having the arc-shaped cross-section are formed from the filter element 120 and then shape maintaining members 130a and 130b are installed at both sides and the vicinity of the filters 21 and 22, as illustrated in FIG. 2, thereby preventing the filters 21 and 22 from being deformed due to an air pressure of compressed air when the compressed air passes through the vent channel 123. Also, the filters 21 and 22 having the arc-shaped cross-section are formed from the filter element 120 and then a +-shaped shape maintaining seam 131 is formed at both sides of the filters 21 and 22 using a hot melt method or silicon resin bonding, as illustrated in FIG. 3, thereby preventing deformation of the filters 21 and 22.

In the filter means 20a and 20b, two (three in FIG. 3) or more pairs of the filters 21 and 22 are inserted into the main body 11 of the case in such a way that space portions S1, S2, and S3 distanced by certain intervals (certain volumes) are formed between the entrance/exit covers 12a and 12b and the filter means 20a and 20b, and between the filter means 20a and 20b and outer circumferential surfaces of the filter means 20a and 20b are closely inserted into an inner side of the main body 11 of the case. As described above, when the filter means 20a and 20b are inserted into the main body 11 of the case, the vent channel 123 formed at the filter element 120 is parallel to an axial direction of the main body 11 of the case, i.e., the flow direction of the compressed air is parallel to the vent channel 123, thereby maintaining a state in which a pressure loss is low.

As described above, when the filter means 20a and 20b are inserted into the main body 11 of the case in such a way that the space portions S1, S2, and S3 are formed, if gap maintaining rings 140a and 140b are inserted between the entrance/exit covers 12a and 12b and the filter means 20a and 20b, and between the filter means 20a and 20b in such a way that outer circumferential surfaces of the filter means 20a and 20b are in contact with the inner side of the main body 11 of the case, certain intervals (certain volumes) of the space portions S1, S2, and S3 may be conveniently defined. The certain intervals of the space portions S1, S2, and S3 are defined by the pressure of compressed air to be purified and the amount of consumption of compressed air.

Also, as described above, a seal 150 is installed at each of the outer circumferential surfaces of the filter means 20a and 20b when the filter means 20a and 20b are inserted into the main body 11 of the case, thereby preventing compressed air to be purified from penetrating between the inner side of the main body 11 of the case and the filter means 20a and 20b and improving purification efficiency. Also, as illustrated in FIG. 3, when the filters 21 and 22 having the arc-shaped cross-section are formed from the filter element 120 and then the filters 21 and 22 that maintain the arc-shaped cross-section are positioned facing each other to be coupled using the hot melt method so as to form the cavity C inside the filters 21 and 22, if the seal 150 is installed at each of outer circumferential surfaces of the filters 21 and 22, coupling of the filters 21 and 22 may be conveniently performed.

As described above, according to an embodiment of the present invention, if the inlet pipe 14a and the outlet pipe 14b are connected to a pipe of an automatic air pressure system or air pressure plant so as to supply compressed air generated by a compressor into the case 10 via the inlet pipe 14a, the compressed air is diffused by the diffusion plate 18, is reduced in the space portion S1 formed between the entrance cover 12a and the filter means 20a and then solid foreign substances contained in the compressed air when the compressed air passes through the vent channel 123 formed at the filter element 120 of the filter 21 are charged with charges (static electricity) that are permanently given to the filter element 120. Thus, fine solid foreign substances (less than 0.3 *µ*m) are dust-collected, and a gas smell of inorganic/organic compounds is collected.

As described above, when the compressed air that is primarily purified by the filter 21 enters the cavity C, there is a pressure difference between pressure inside the cavity C and pressure in the space portion S1. Also, there is a distance difference between the center and an outer circumferential part of the cavity C and the surface of the filter 21 and thus there is a pressure difference between the center and the outer circumferential part of the cavity C. Thus, the compressed air inside the cavity C swirls or is turbulent, passes through the vent channel 123 of the filter element 120 of the filter 22 and is secondarily purified. Then, the compressed air swirls or is turbulent in the space portion S2 formed between the filter means 20a and the filter means 20b, and the filter means 20b re-dust-collects or collects foreign substances by the same action as the filter means 20a.

Also, when the solid foreign substances are dust-collected or collected, dust that takes the most part of the solid foreign substances is asymmetric bar-shaped, needle-shaped or flake-shaped. Also, the most part of dust has polarity. Dust having no polarity also has polarity due to the charges given to the main body 121 of the filter, and the solid foreign substances are dust-collected in the filter element 120. In this way, the compressed air to be purified when the solid foreign substances are dust-collected, is reduced and swirls or is turbulent, and when pressures of parts are made different, the compressed air passes through the vent channel 123 formed at the filter element 120 at different angles so that purification efficiency may be greatly improved.

As described above, by reducing the compressed air to be purified, by causing swirl or turbulence of the compressed air and by making pressure of parts different, when the solid foreign substances are charged with the charges given to the main body 121 of the filter, inertia generated when the compressed air passes through the vent channel 123 may be maintained less than an electric field strength of the charges given to the main body 121 of the filter so that good purification efficiency may be maintained.

As described above, the compressed air in which the solid foreign substances that pass through a final filter means are duct-collected, is maintained in a reduced state in the space portion S3 and is discharged to the pipe via the outlet pipe 14b so that the strength of the compressed air inside the case 10 is less than the strength of the electric field of the charges given to the main body 121 of the filter and dust-collection efficiency may be increased.

### INDUSTRIAL APPLIABILITY

As described above, according to an embodiment of the present invention, two or more pairs of filter means in which filters having an arc-shaped cross-section are positioned facing each other to be coupled, thereby forming a cavity inside the filters, are inserted into a case in such a way that space portions distanced by certain intervals are formed between entrance/exit covers and the filter means, and between the filter means, so that compressed air may be reduced, pressures of the center and an outer circumferential surface of the cavity formed inside the filter means are made different, the compressed air swirls or is turbulent, purification efficiency may be greatly improved and good purification efficiency may be maintained.

## Claims

1. A compressed air purifier comprising:
a case (10) in which entrance/exit covers (12a, 12b) are coupled to both (11) ends of a main body of a cylindrical case, and an inlet pipe (14a) and an outlet pipe (14b) connected to a compressed air pipe are connected to the entrance/exit covers (12a, 12b), respectively; and
filter means (20a, 20b) in which a main body (121) of a filter made of a polymer synthetic resin is charged electrostatically and a plurality of gap maintaining protrusions (122) are simultaneously formed, and then the main body (121) of the filter is wound into a cylindrical shape to form a filter element (120) having a vent channel (123), filters (21, 22) having an arc-shaped cross-section are formed from the filter element (120) and then, shape maintaining members (130a, 130b) are installed at both sides and the vicinity of the filters (21, 22), the filters having an arc-shaped cross-section are positioned facing each other to be coupled, thereby forming a cavity (c) inside the filters (21) and (22), and two or more pairs of the filters are inserted into the main body (11) of a case in such a way that space portions (S1, S2, S3) distanced by certain intervals are formed between the entrance/exit covers (12a, 12b) and the filter, and between the filters.

2. The compressed air purifier of claim 1, wherein a diffusion plate (18) is installed at a lower part of the inlet pipe (14a) of the entrance cover (12a).

3. The compressed air purifier of claim 1, wherein the filters (21, 22) having an arc-shaped cross-section are formed from the filter element (120) and then, a plus-shaped shape maintaining seam (131) is formed at both sides of the filters (21, 22).

4. The compressed air purifier of claim 1, wherein gap maintaining rings (140a, 140b) are installed between the entrance/exit covers (12a, 12b) and the filter means, and between the filter means (20a, 20b) in such a way that outer circumferential surfaces of the filter means are closely inserted into the main body (11) of the case (10).

5. The compressed air purifier of claim 1, wherein a seal (150) is installed at each of outer circumferential surfaces of the filter means (20a, 20b).

## Patentansprüche

1. Luftreiniger für komprimierte Luft, umfassend:
ein Gehäuse (10), in dem Eingangs-/Ausgangsdeckel (12a, 12b) mit beiden (11) Enden eines Hauptkörpers eines zylindrischen Gehäuses gekoppelt sind und ein Einlassrohr (14a) und ein Auslassrohr (14b), die mit einem Druckluftrohr verbunden sind, mit dem Eingangsdeckel bzw. Ausgangsdeckel (12a, 12b) verbunden sind; und
Filtermittel (20a, 20b), in denen ein Hauptkörper (121) eines aus einem Polymerkunstharz hergestellten Filters elektrostatisch geladen ist und eine Vielzahl von Spalterhaltungsvorsprüngen (122) gleichzeitig ausgebildet ist und dann der Hauptkörper (121) des Filters in eine zylindrische Form gewickelt ist, um ein Filterelement (120) mit einem Entlüftungskanal (123) zu bilden, Filter (21, 22) mit einem bogenförmigen Querschnitt aus dem Filterelement (120) gebildet sind und dann Formerhaltungselemente (130a, 130b) an beiden Seiten und in der Nähe der Filter (21, 22) installiert sind, die Filter mit einem bogenförmigen Querschnitt zum Koppeln gegenüberliegend positioniert sind, wodurch ein Hohlraum (c) innerhalb der Filter (21) und (22) gebildet wird, und zwei oder mehr Paare der Filter in den Hauptkörper (11) eines Gehäuses so eingesetzt sind, dass in bestimmten Intervallen beabstandete Raumabschnitte (S1, S2, S3) zwischen den Eingangs-/Ausgangsdeckeln (12a, 12b) und dem Filter und zwischen den Filtern gebildet werden.

2. Luftreiniger für komprimierte Luft nach Anspruch 1, wobei eine Verteilplatte (18) an einem unteren Teil des Einlassrohres (14a) des Eingangsdeckels (12a) installiert ist.

3. Luftreiniger für komprimierte Luft nach Anspruch 1, wobei die Filter (21, 22) mit einem bogenförmigen Querschnitt aus dem Filterelement (120) gebildet sind und dann ein Plus-förmiger Formerhaltungssaum (131) an beiden Seiten der Filter (21, 22) ausgebildet ist.

4. Luftreiniger für komprimierte Luft nach Anspruch 1, wobei Spalterhaltungsringe (140a, 140b) zwischen den Eingangs-/Ausgangsdeckeln (12a, 12b) und zwischen den Filtermitteln (20a, 20b) so installiert sind, dass Außenumfangsflächen der Filtermittel in den Hauptkörper (11) des Gehäuses (10) eng eingesetzt sind.

5. Luftreiniger für komprimierte Luft nach Anspruch 1, wobei eine Dichtung (150) an jeder der Außenumfangsflächen der Filtermittel (20a, 20b) installiert ist.

## Revendications

1. Épurateur d'air comprimé, comprenant :
un boîtier (10) dans lequel des couvercles d'entrée / de sortie (12a, 12b) sont accouplés avec deux bouts (11) d'un corps principal d'un boîtier cylindrique, et un tuyau d'entrée (14a) et un tuyau de sortie (14b), raccordés à un tuyau d'air comprimé, sont raccordés aux couvercles d'entrée / de sortie (12a, 12b) respectivement ; et
des dispositifs de filtre (20a, 20b) dans lesquels un corps principal (121) d'un filtre réalisé en résine synthétique polymère est soumis à une charge électrostatique, et une série de saillies (122) de maintien de l'écart sont formées simultanément, le corps principal (121) du filtre étant enroulé dans une forme cylindrique pour former une élément filtrant (120) doté d'un canal d'évent (123), des filtres (21, 22) à section transversale arquée étant formés à partir de la cartouche de filtre (120), puis des éléments de maintien de la forme (130a, 130b) sont installés des deux côtés et à proximité des filtres (21, 22), les filtres à section transversale arquée étant positionnés l'un en face de l'autre de façon à être accouplés, en formant ainsi une cavité (c) à l'intérieur des filtres (21) et (22), et deux ou plusieurs paires des filtres étant insérées dans le corps principal (11) d'un boîtier, de sorte que des parties de l'espace (S1, S2, S3), espacées par certains intervalles, sont formées à la fois entre les couvercles d'entrée / de sortie (12a, 12b) et le filtre, et entre les filtres.

2. Épurateur d'air comprimé selon la revendication 1, une plaque de diffusion (18) étant installée dans une partie inférieure du tuyau d'entrée (14a) du couvercle d'entrée (12a).

3. Épurateur d'air comprimé selon la revendication 1, les filtres (21, 22) à section transversale arquée étant formés en fonction de la cartouche de filtre (120), puis un joint en forme de « plus » de maintien de la forme (131) étant formé des deux côtés des filtres (21) et (22).

4. Épurateur d'air comprimé selon la revendication 1, des bagues de maintien de l'écart (140a, 140b) étant installées entre les couvercles d'entrée / de sortie (12a, 12b) et les dispositifs de filtre, et entre les dispositifs de filtre (20a, 20b), de sorte que les surfaces circonférentielles extérieures des dispositifs de filtre soient insérées étroitement dans le corps principal (11) du boîtier (10).

5. Épurateur d'air comprimé selon la revendication 1, une garniture d'étanchéité (150) étant installée sur chacune des surfaces circonférentielles extérieures des dispositifs de filtre (20a, 20b).
